(19) Europäisches Patentamt
European Patent Office
Office européen des brevets

(11) **EP 4 583 126 A1**

(12) **EUROPEAN PATENT APPLICATION**
published in accordance with Art. 153(4) EPC

(43) Date of publication:
**09.07.2025 Bulletin 2025/28**

(21) Application number: 23860278.3

(22) Date of filing: **28.08.2023**

(51) International Patent Classification (IPC):
**H01B 7/02** (2006.01) **H01B 3/24** (2006.01)
**H01B 3/30** (2006.01)

(52) Cooperative Patent Classification (CPC):
**H01B 3/24; H01B 3/30; H01B 7/02**

(86) International application number:
**PCT/JP2023/030975**

(87) International publication number:
**WO 2024/048516 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.08.2022 JP 2022137119**

(71) Applicant: DAIKIN INDUSTRIES, LTD.
**Osaka-shi, Osaka 530-0001 (JP)**

(72) Inventors:
• **WADA, Hiroaki**
 **Osaka-Shi, Osaka 530-0001 (JP)**

• **FUJIOKA, Seika**
 **Osaka-Shi, Osaka 530-0001 (JP)**
• **HORISAWA, Kazushi**
 **Osaka-Shi, Osaka 530-0001 (JP)**
• **KONO, Hideki**
 **Osaka-Shi, Osaka 530-0001 (JP)**
• **TANIMOTO, Kenjiro**
 **Osaka-Shi, Osaka 530-0001 (JP)**
• **SUKEGAWA, Masamichi**
 **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **INSULATED WIRE**

(57) Provided is an insulated electric wire comprising a conductor and a coating layer formed on a periphery of the conductor, wherein the coating layer comprises a fluororesin layer containing a melt-fabricable fluororesin and a PAEK resin layer containing a polyaryl ether ketone (PAEK) resin that is formed on a periphery of the fluororesin layer, and wherein a thickness of the coating layer is 40 to 300 μm.

EP 4 583 126 A1

**Description**

TECHNICAL FIELD

The present disclosure relates to an insulated electric wire.

BACKGROUND ART

Patent Document 1 describes an insulated wire having an insulating film including at least two insulating layers stacked on a conductor having a rectangular cross section, wherein the stacked insulating films include an enamel insulating layer made of thermosetting resin on the outer periphery of the conductor and an extruded insulating layer made of thermoplastic resin outside the enamel insulating layer, wherein the enamel insulating layer has a thickness of 50 $\mu$m or more, and the total thickness (T) and the relative dielectric constant ($\varepsilon$) at 100°C of the stacked insulating films, and the maximum thickness (T max) and the maximum value ($\varepsilon$ max) and the minimum value ($\varepsilon$ min) of the relative dielectric constant at 100°C of one layer in the stacked insulating layers satisfy all of the following relations.

$$T \geq 100 \ \mu m \quad (1.1)$$

$$T_{max} \leq 100 \ \mu m \quad (1.2)$$

$$1.5 \leq \varepsilon \leq 3.5 \quad (2.1)$$

$$1.0 \leq \varepsilon_{max}/\varepsilon_{min} \leq 1.2 \quad (2.2)$$

Patent Document 2 describes a flat magnet wire including a flat conductor and a covering layer formed of heat-shrinkable tube for forming a covering layer of the flat magnet wire, which contains a copolymer including tetrafluoroethylene unit and a fluoroalkyl vinyl ether unit, formed on the periphery of the flat conductor.

RELATED ART

PATENT DOCUMENT

Patent Document 1: International Publication No. WO 2017-175516
Patent Document 2: Japanese Patent Laid-Open No. 2021-2458

SUMMARY OF THE INVENTION

PROBLEM TO BE SOLVED BY THE INVENTION

An object of the present disclosure is to provide an insulated electric wire comprising a coating layer that has a low dielectric constant and is unlikely to be damaged, and that does not repel varnish.

MEANS FOR SOLVING THE PROBLEM

According to a first point of view of the present disclosure, provided is an insulated electric wire comprising: a conductor; and a coating layer formed on a periphery of the conductor, wherein the coating layer comprises: a fluororesin layer containing a melt-fabricable fluororesin; and a PAEK resin layer containing a polyaryl ether ketone (PAEK) resin that is formed on a periphery of the fluororesin layer, and wherein a thickness of the coating layer is 40 to 300 $\mu$m.

EFFECTS OF THE INVENTION

According to the present disclosure, it is possible to provide an insulated electric wire comprising a coating layer that has a low dielectric constant and is unlikely to be damaged, and that does not repel varnish.

## DESCRIPTION OF EMBODIMENTS

A specific embodiment of the present disclosure is described in detail as follows, though the present disclosure is not limited to the following embodiment.

Patent Document 1 describes that it is required that a larger number of wound wires are accommodated into the slots of a stator in order to enhance the performance of a rotating machine such as a motor. Further, Patent Document 1 describes, as an insulated electric wire used for such a wound wire, an insulated wire having an insulating film including at least two insulating layers stacked on a conductor having a rectangular cross section, and describes that the stacked insulating films include an enamel insulating layer made of a thermosetting resin on the outer periphery of the conductor and an extruded insulating layer made of a thermoplastic resin outside the enamel insulating layer.

Further, Patent Document 2 describes that, in a flat magnet wire comprising a flat conductor and a covering layer formed on the periphery of the flat conductor, the covering layer is formed of a heat-shrinkable tube for forming the covering layer of a flat magnet wire, which contains a copolymer containing tetrafluoroethylene unit and a fluoroalkyl vinyl ether unit.

However, with the conventional constitutions of the coating layer of an insulated electric wire, it is difficult to reduce the dielectric constant of the coating layer, and to enhance the damage resistance and the affinity with varnish at the same time. Motors used for electric vehicles tend to use high voltage in order to downsize the motors and enhance the performance. As the voltage increases, the coated electric wire used for a motor requires a partial discharge inception voltage higher than conventional coated electric wires, and, in addition, it is preferable that the coating layer of the insulated electric wire is thin in order to make it possible to downsize the motor. It is preferable to use a material having a low dielectric constant in order to form the coating layer. However, there is a problem that, if a relatively thin coating layer is formed using a material having a low dielectric constant, the coating layer is easily damaged when the coating layer is inserted into the slot of the core of a rotating electric machine, for example, whereby the insulation characteristics are impaired. Further, there is a problem that, where the insulated electric wire comprises a flat conductor, it is necessary to apply a large load to the insulated electric wire using a metal jig in order to bend the insulated electric wire in the edgewise direction and, at this time, the coating layer is easily damaged, whereby the insulation characteristics are impaired. Further, the insulated electric wire is sometimes fixed to the core using a varnish for impregnation containing an epoxy resin or the like, but there is a problem that conventional coating layers using materials having low dielectric constant repel the varnish and, therefore, it is not easy to fix the insulated electric wire to the core.

In contrast, in the insulated electric wire of the present disclosure, a laminate structure containing a fluororesin layer containing a melt-fabricable fluororesin and a PAEK resin layer containing a polyaryl ether ketone (PAEK) resin constitutes the coating layer, and, therefore, the dielectric constant of the coating layer is sufficiently low and, furthermore, the coating layer is unlikely to be damaged when inserted into the slot of the core of a rotating electric machine or when bent in the edgewise direction, for example. Furthermore, the coating layer sufficiently blends with a varnish for impregnation. Therefore, the insulated electric wire of the present disclosure may be easily deformed into a shape that may be easily accommodated in a slot without impairing the satisfactory insulation characteristics and, furthermore, the insulated electric wire may also be easily fixed to a core. Therefore, the insulated electric wire of the present disclosure may downsize a rotating electric machine such as a motor and enhance the performance of the rotating electric machine.

The insulated electric wire of the present disclosure comprises a conductor and a coating layer formed on a periphery of the conductor. Next, the constitutions of the conductor and the coating layer are described in more detail.

(Conductor)

The conductor may be a single wire, an assembled wire, a stranded wire, or the like, but a single wire is preferred. The conductor may have any of a round cross section, an oval cross section, a rectangular cross section, a square cross section, and a polygonal cross section.

The conductor is not limited as long as it is made of a conductive material, and may be made of a material such as copper, copper alloy, aluminum, aluminum alloy, iron, silver and nickel. One made of at least one selected from the group consisting of copper, copper alloy, aluminum and aluminum alloy is preferred. Alternatively, a conductor plated with silver or nickel may be used. As the copper, an oxygen-free copper, low-oxygen copper, or copper alloy may be used.

Where the conductor has an approximately rectangular cross section, that is, where the conductor is a flat conductor, the width of the cross section of the conductor may be 1 to 75 mm, and the thickness of the cross section of the conductor may be 0.1 to 10 mm. The conductor may have a rectangular cross section. The outer peripheral diameter of the conductor may be 6.5 mm or more and 200 mm or less. Further, the ratio of the width to the thickness may be more than 1 and 30 or less.

Where the conductor has an approximately round cross section, that is, where the conductor is a round conductor, the diameter of the conductor is preferably 0.1 to 10 mm, and more preferably 0.3 to 3 mm.

From the viewpoint that the conductor is in further firm contact with the fluororesin layer, the surface roughness Sz of the conductor is preferably 0.2 to 12 $\mu$m, more preferably 1 $\mu$m or more, still more preferably 5 $\mu$m or more, and more

preferably 10 μm or less.

The surface roughness of the conductor may be adjusted by surface-treating the conductor by a surface-treatment method such as etching treatment, blasting treatment, and laser treatment. Further, recesses and projections may be provided on the surface of the conductor by a surface treatment. The smaller the distance between projected parts is, the more preferable it is, and the distance is, for example, 0.5 μm or less. Further, with regard to the size of the recesses and projections, for example, the area of one recessed part, when a projected part relative to the unprocessed surface is cut, is 0.5 μm$^2$ or less. The recesses and projections may have a crater-type single shape, or have an ant nest-like branched shape.

(Covering layer)

The coating layer is formed on a periphery of the conductor, and comprises a fluororesin layer and a PAEK resin layer.

From the viewpoint of insulation characteristics, the thickness of the coating layer is preferably 40 to 300 μm, more preferably 50 μm or more, still more preferably 60 μm or more, more preferably 250 μm or less, and still more preferably 200 μm or less.

From the viewpoint of insulation characteristics, the relative dielectric constant of the coating layer is preferably 2.9 or less, more preferably 2.7 or less, still more preferably 2.5 or less, particularly preferably 2.4 or less, and preferably 1.8 or more. The relative dielectric constant is a value obtained by measuring the changes in the resonant frequency and the electric field intensity at a temperature of 20 to 25°C using a network analyzer HP8510C (manufactured by Hewlett Packard Enterprise) and a cavity resonator.

From the viewpoint of insulation characteristics, the proportion of the mass of the fluororesin layer in the coated electric wire relative to the mass of the insulated electric wire is preferably 50 mass% or more, more preferably 55 mass% or more, still more preferably 70 mass% or more, preferably 95 mass% or less, and more preferably 90 mass% or less.

From the viewpoint of insulation characteristics, it is preferable that the partial discharge inception voltage of the insulated electric wire measured at 25°C satisfies the following relational expression:

$$\texttt{Partial discharge inception voltage (V)} \geq 2.2 \times X + 810$$

wherein X is the proportion of the mass (mass%) of the fluororesin layer relative to the mass of the insulated electric wire.

It is preferable that the partial discharge inception voltage of the insulated electric wire is unlikely to change even if the temperature changes. The rate of change calculated by the following expression from the partial discharge inception voltage of the insulated electric wire measured at 25°C and the partial discharge inception voltage of the insulated electric wire measured at 200°C is preferably less than 10%, and more preferably less than 5%:

Rate of change (%) = [(Partial discharge inception voltage measured at 25°C) - (Partial discharge inception voltage measured at 200°C)]/(Partial discharge inception voltage measured at 25°C) × 100.

It is preferable that the partial discharge inception voltage of the insulated electric wire is unlikely to change even after using the insulated electric wire at a high temperature for a long period of time. The rate of change calculated by the following expression from the partial discharge inception voltage of the insulated electric wire measured at 25°C and the partial discharge inception voltage of the insulated electric wire measured at 25°C after heating insulated electric wire at 200°C for 1,000 hours is preferably less than 10%, and more preferably less than 5%:

Rate of change (%) = [(Partial discharge inception voltage measured at 25°C after heating insulated electric wire at 200°C for 1,000 hours) - (Partial discharge inception voltage measured at 25C°)]/(Partial discharge inception voltage measured at 25°C) × 100.

"Partial discharge inception voltage measured at 25°C" is a partial discharge inception voltage of an insulated electric wire that has not been heated at 200°C or more for 1 hour or more.

In an embodiment of the insulated electric wire, it is preferable that the thickness of the PAEK resin layer is 15 μm or more, and the load that causes energization is 1,500 g or more.

The load that causes energization is a force (g) at an occurrence time of electrical connection between a needle and the conductor when the surface of the coating layer of the insulated electric wire is scratched with the needle with a continuously increasing force. If the coating layer of the insulated electric wire is configured so that the load that causes energization is 1,500 g or more, the abrasion resistance of the coating layer is enhanced, whereby a coating layer that is further unlikely to be damaged when the coating layer of the insulated electric wire is inserted into the slot of the core of a rotating electric machine or when the insulated electric wire is bent in the edgewise direction may be obtained. The load that causes energization may be measured in accordance with the method described in JIS C3216-3.

(Fluororesin layer)

The fluororesin layer is formed on the periphery of the conductor, and the PAEK resin layer is formed on the outer periphery of the fluororesin layer. Since the coated electric wire of the present disclosure comprises such constitutions, the fluororesin layer is not brought into contact with a member such as a jig and a slot when the coated electric wire is bent applying a large load using a metal jig or when the coated electric wire is inserted into the slot of the core. Therefore, the coated electric wire may be easily deformed into a shape that may be easily accommodated in a slot without damaging the fluororesin layer, while the excellent electrical characteristics of the fluororesin layer is maintained, and, furthermore, the coated electric wire may be smoothly inserted into the slot of the core. In addition, by impregnating the coated electric wire with varnish, the varnish may adhere to the PAEK resin layer, which is excellent in affinity with varnish, not to the fluororesin layer, which is poor in affinity with varnish, whereby the coated electric wire inserted into the slot may be easily fixed to the core.

The fluororesin layer contains a melt-fabricable fluororesin. In the present disclosure, the term "melt-fabricable" means that a polymer can be melted and processed using a conventional processing device such as an extruder and an injection molding machine. Accordingly, the melt-fabricable fluororesin has a melt flow rate measured by the following measurement method of usually 0.01 to 500 g/10 minutes.

The melt flow rate of the fluororesin is preferably 0.1 to 120 g/10 minutes, more preferably 80 g/10 minutes or less, still more preferably 70 g/10 minutes or less, preferably 5 g/10 minutes or more, and more preferably 10 g/10 minutes or more. With a melt flow rate of the fluororesin in the above-described range, the fluororesin layer may be easily formed, and the mechanical strength of the obtained fluororesin layer is excellent.

In the present disclosure, the melt flow rate of the fluororesin is a value obtained as the mass of polymer flowing out from a nozzle having an inner diameter of 2.1 mm and a length of 8 mm per 10 minutes (g/10 minutes) at 372°C under a load of 5 kg, using a melt indexer (manufactured by Yasuda Seiki Seisakusho, Ltd.) according to ASTM D1238.

The melting point of the fluororesin is preferably 200 to 322°C, more preferably 220°C or more, still more preferably 240°C or more, further preferably 260°C or more, particularly preferably 280°C or more, and more preferably 320°C or less.

The melting point can be measured using a differential scanning calorimeter [DSC].

Examples of the melt-fabricable fluororesin include a tetrafluoroethylene (TFE)/fluoroalkyl vinyl ether (FAVE) copolymer, a tetrafluoroethylene (TFE)/hexafluoropropylene (HFP) copolymer, a TFE/ethylene copolymer [ETFE], a TFE/ethylene/HFP copolymer, an ethylene/chlorotrifluoroethylene (CTFE) copolymer [ECTFE], polychlorotrifluoroethylene [PCTFE], a CTFE/TFE copolymer, polyvinylidene fluoride [PVdF], a TFE/vinylidene fluoride (VdF) copolymer [VT], polyvinyl fluoride [PVF], a TFE/VdF/CTFE copolymer [VTC], and a TFE/HFP/VdF copolymer.

The fluororesin is preferably one selected from the group consisting of a TFE/FAVE copolymer and a TFE/HFP copolymer.

From the viewpoints of excellence in heat resistance, moldability and electrical characteristics and the viewpoint that the conductor is in further firm contact with the fluororesin layer, the fluororesin is preferably at least one selected from the group consisting of a TFE/FAVE copolymer and a TFE/HFP copolymer.

The TFE/FAVE copolymer is a copolymer containing a tetrafluoroethylene (TFE) unit and a fluoroalkyl vinyl ether (FAVE) unit.

Examples of the FAVE that constitutes an FAVE unit include at least one selected from the group consisting of a monomer represented by a general formula (1):

$$CF_2=CFO(CF_2CFY^1O)_p-(CF_2CF_2CF_2O)_q-Rf \qquad (1)$$

wherein $Y^1$ represents F or $CF_3$, Rf represents a perfluoroalkyl group having 1 to 5 carbon atoms, p represents an integer of 0 to 5, and q represents an integer of 0 to 5; and
a monomer represented by a general formula (2):

$$CFX=CXOCF_2OR^1 \qquad (2)$$

wherein X are the same or different and represent H, F or $CF_2$; and $R^1$ represents a linear or branched fluoroalkyl group having 1 to 6 carbon atoms, which may contain 1 to 2 of at least one type of atoms selected from the group consisting of H, Cl, Br and I; or a cyclic fluoroalkyl group having 5 or 6 carbon atoms, which may contain 1 to 2 of at least one type of atoms selected from the group consisting of H, Cl, Br and I.

In particular, FAVE is preferably a monomer represented by the general formula (1), more preferably one selected from the group consisting of perfluoro(methyl vinyl ether), perfluoro(ethyl vinyl ether) (PEVE), and perfluoro(propyl vinyl ether) (PPVE), still more preferably one selected from the group consisting of PEVE and PPVE, and particularly preferably PPVE.

From the viewpoint that the conductor is in further firm contact with the fluororesin layer, the FAVE unit content in the TFE/FAVE copolymer relative to all the monomer units is preferably 1.0 to 30.0 mol%, more preferably 1.2 mol% or more, still more preferably 1.4 mol% or more, further preferably 1.6 mol% or more, particularly preferably 1.8 mol% or more, and more preferably 3.5 mol% or less, still more preferably 3.2 mol% or less, further preferably 2.9 mol% or less, particularly preferably 2.6 mol% or less.

From the viewpoint that the conductor is in further firm contact with the fluororesin layer, the TFE unit content in the TFE/FAVE copolymer relative to all the monomer units is preferably 99.0 to 70.0 mol%, more preferably 96.5 mol% or more, still more preferably 96.8 mol% or more, further preferably 97.1 mol% or more, particularly preferably 97.4 mol% or more, and more preferably 98.8 mol% or less, still more preferably 98.6 mol% or less, further preferably 98.4 mol% or less, particularly preferably 98.2 mol% or less.

In the present disclosure, the content of each monomer unit in the copolymer is measured by $^{19}$F-NMR method.

The TFE/FAVE copolymer may contain a monomer unit derived from a monomer copolymerizable with TFE and FAVE. In that case, the content of the monomer copolymerizable with TFE and FAVE relative to all the monomer units of the TFE/FAVE copolymer is preferably 0 to 29.0 mol%, more preferably 0.1 to 5.0 mol%, still more preferably 0.1 to 1.0 mol%.

Examples of the monomer copolymerizable with TFE and FAVE include HFP, a vinyl monomer represented by $CZ^1Z^2=CZ^3(CF_2)_nZ^4$, wherein $Z^1$, $Z^2$ and $Z^3$ are the same or different and represent H or F; $Z^4$ represents H, F or Cl; and n represents an integer of 2 to 10; an alkyl perfluoro vinyl ether derivative represented by $CF_2=CF-OCH_2-Rf^1$, wherein $Rf^1$ represents a perfluoroalkyl group having 1 to 5 carbon atoms; and a monomer having a functional group. In particular, HFP is preferred.

The TFE/FAVE copolymer is preferably one selected from the group consisting of a copolymer including a TFE unit and an FAVE unit only, and the TFE/HFP/FAVE copolymer; and more preferably the copolymer including a TFE unit and an FAVE unit only.

From the viewpoints of heat resistance and stress crack resistance, the melting point of the TFE/FAVE copolymer is preferably 240 to 322°C, more preferably 285°C or more, more preferably 320°C or less, still more preferably 315°C or less, and particularly preferably 310°C or less. The melting point may be measured by using a differential scanning calorimeter [DSC].

The glass transition temperature (Tg) of the TFE/FAVE copolymer is preferably 70 to 110°C, more preferably 80°C or more, and more preferably 100°C or less. The glass transition temperature may be measured by dynamic viscoelasticity measurement.

From the viewpoint of electrical characteristics, the relative dielectric constant of the TFE/FAVE copolymer is preferably 2.4 or less, more preferably 2.1 or less, and the lower limit is preferably 1.8 or more, though not limited. The relative dielectric constant is a value obtained by measuring the changes in the resonant frequency and the electric field intensity at a temperature of 20 to 25°C using a network analyzer HP8510C (manufactured by Hewlett Packard Enterprise) and a cavity resonator.

The TFE/HFP copolymer is a copolymer containing tetrafluoroethylene (TFE) unit and hexafluoropropylene (HFP) unit.

From the viewpoint that the conductor is in further firm contact with the fluororesin layer, the HFP unit content in the TFE/HFP copolymer relative to all the monomer units is preferably 0.1 to 30.0 mol%, more preferably 0.7 mol% or more, still more preferably 1.4 mol% or more, and more preferably 10 mol% or less.

From the viewpoint that the conductor is in further firm contact with the fluororesin layer, the TFE unit content in the TFE/HFP copolymer relative to all the monomer units is preferably 70.0 to 99.9 mol%, more preferably 90.0 mol% or more, and preferably 99.3 mol% or less, more preferably 98.6 mol%.

The TFE/HFP copolymer may contain a monomer unit derived from a monomer copolymerizable with TFE and HFP. In that case, the content of the monomer copolymerizable with TFE and HFP relative to all the monomer units of the TFE/HFP copolymer is preferably 0 to 29.9 mol%, more preferably 0.1 to 5.0 mol%, still more preferably 0.1 to 1.0 mol%.

Examples of the monomer copolymerizable with TFE and HFP include FAVE, a vinyl monomer represented by $CZ^1Z^2=CZ^3(CF_2)_nZ^4$, wherein $Z^1$, $Z^2$ and $Z^3$ are the same or different and represent H or F; $Z^4$ represents H, F or Cl; and n represents an integer of 2 to 10; an alkyl perfluoro vinyl ether derivative represented by $CF_2=CF-OCH_2-Rf^1$, wherein $Rf^1$ represents a perfluoroalkyl group having 1 to 5 carbon atoms; and a monomer having a functional group. In particular, FAVE is preferred.

The melting point of the TFE/HFP copolymer is preferably 200 to 322°C, more preferably 210°C or more, still more preferably 220°C or more, particularly preferably 240°C or more, more preferably 320°C or less, still more preferably less than 300°C, and particularly preferably 280°C or less.

The glass transition temperature (Tg) of the TFE/HFP copolymer is preferably 60 to 110°C, more preferably 65°C or more, and more preferably 100°C or less.

It is preferable that the fluororesin have a functional group. Due to having a functional group, the conductor is able to be in further firm contact with the fluororesin layer.

The functional group is preferably at least one selected from the group consisting of a carbonyl group-containing group, an amino group, a hydroxy group, a difluoromethyl group ($-CF_2H$ group), an olefinic group, an epoxy group and an isocyanate group.

The carbonyl group-containing group is a group that contains a carbonyl group (-C(=O)-) in the structure. Examples of the carbonyl group-containing group include:

a carbonate group [$-O-C(=O)-OR^3$, wherein $R^3$ is an alkyl group having 1 to 20 carbon atoms or an alkyl group having 2 to 20 carbon atoms that contains an etheric oxygen atom],
an acyl group [$-C(=O)-R^3$, wherein $R^3$ is an alkyl group having 1 to 20 carbon atoms or an alkyl group having 2 to 20 carbon atoms that contains an etheric oxygen atom],
a haloformyl group [$-C(=O)X^5$, wherein $X^5$ is a halogen atom],
a formyl group [$-C(=O)H$],
a group represented by a formula: $-R^4-C(=O)-R^5$, wherein $R^4$ is a divalent organic group having 1 to 20 carbon atoms, and $R^5$ is a monovalent organic group having 1 to 20 carbon atoms,
a group represented by a formula: $-O-C(=O)-R^6$, wherein $R^6$ is an alkyl group having 1 to 20 carbon atoms, or an alkyl group having 2 to 20 carbon atoms that contains an etheric oxygen atom,
a carboxyl group [$-C(=O)OH$],
an alkoxycarbonyl group [$-C(=O)OR^7$, wherein $R^7$ is a monovalent organic group having 1 to 20 carbon atoms],
a carbamoyl group [$-C(=O)NR^8R^9$, wherein $R^8$ and $R^9$ may be the same or different, being a hydrogen atom or a monovalent organic group having 1 to 20 carbon atoms], and
an acid anhydride bond [$-C(=O)-O-C(=O)-$].

Specific examples of $R^3$ include a methyl group, an ethyl group, a propyl group, an isopropyl group and a butyl group. Specific examples of $R^4$ described above include a methylene group, a $-CF_2-$ group and a $-C_6H_4-$ group, and specific examples of $R^5$ include a methyl group, an ethyl group, a propyl group, an isopropyl group and a butyl group. Specific examples of $R^7$ include a methyl group, an ethyl group, a propyl group, an isopropyl group and a butyl group. Further, specific examples of $R^8$ and $R^9$ include a hydrogen atom, a methyl group, an ethyl group, a propyl group, an isopropyl group, a butyl group and a phenyl group.

The hydroxy group is a group represented by -OH or a group containing a group represented by -OH. In the present disclosure, -OH that constitutes a carboxyl group is not included in the hydroxy group. Examples of the hydroxy group include -OH, a methylol group and an ethylol group.

The olefinic group is a group having a carbon-carbon double bond. Examples of the olefinic group include a functional group represented by the following formula:

$$-CR^{10}=CR^{11}R^{12}$$

wherein $R^{10}$, $R^{11}$ and $R^{12}$ may be the same or different, being a hydrogen atom, a fluorine atom or a monovalent organic group having 1 to 20 carbon atoms,
and at least one selected from the group consisting of $-CF=CF_2$, $-CH=CF_2$, $-CF=CHF$, $-CF=CH_2$ and $-CH=CH_2$ is preferred.

The isocyanate group is a group represented by -N=C=O.

From the viewpoint that the conductor is in further firm contact with the fluororesin layer, the number of functional groups of the fluororesin is preferably 5 to 1,300 per 1,000,000 carbon atoms. The number of functional groups per $10^6$ carbon atom is more preferably 50 or more, still more preferably 100 or more, particularly preferably 200 or more, and more preferably 1,000 or less, still more preferably 800 or less, particularly preferably 700 or less, most preferably 500 or less.

Also, from the viewpoint of formability of the coating layer excellent in electrical characteristics, the number of functional groups of the fluororesin may be less than 5 piece per $10^6$ carbon atoms.

The functional group includes a functional group present at an end of the main chain or at an end of the side chain of a copolymer (fluororesin), and a functional group present in the main chain or in the side chain, suitably present at an end of the main chain. Examples of the functional group include $-CF=CF_2$, $-CF_2H$, $-COF$, $-COOH$, $-COOCH_3$, $-CONH_2$, $-CH_2OH$, and at least one selected from the group consisting of $-CF_2H$, $-COF$, $-COOH$, $-COOCH_3$ and $-CH_2OH$ is

preferred. The -COOH includes a dicarboxylic acid anhydride (-CO-O-CO-) which is formed through bonding of two -COOH.

In identification of the type of the functional group and measurement of the number of functional groups, infrared spectroscopy may be used.

Specifically, the number of functional groups are measured by the following method. First, a copolymer is melted at 330 to 340°C for 30 minutes, and compression molded into a film having a thickness of 0.20 to 0.25 mm. The film is analyzed by Fourier transform infrared spectroscopy to obtain an infrared absorption spectrum of the copolymer. A differential spectrum, which is a difference from a base spectrum of completely fluorinated polymer having no functional group, is then obtained. From the absorption peak of a specific functional group in the differential spectrum, the number N of functional group per $1 \times 10^6$ carbon atoms in the copolymer is calculated according to the following formula (A).

$$N = I \times K / t \qquad (A)$$

I: absorbance
K: correction coefficient
T: film thickness (mm)

For reference sake, the absorption frequency, molar absorption coefficient and correction coefficient of the functional groups of the present disclosure are shown in Table 1. Incidentally, the molar absorption coefficient is determined from the FT-IR measurement data of a low molecular weight model compound.

[Table 1]

Table 1

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Incidentally, the absorption frequency of each of - $CH_2CF_2H$, -$CH_2COF$, -$CH_2COOH$, -$CH_2COOCH_3$ and -$CH_2CONH_2$ is lower by several tens of kayser (cm$^{-1}$) than the absorption frequency shown in Table for each of -$CF_2H$, -COF, free -COOH and bonded - COOH, -$COOCH_3$ and -$CONH_2$.

Accordingly, for example, the number of functional groups -COF is a total of the number of functional groups determined from the absorption peak at an absorption frequency of 1883 cm$^{-1}$ caused by -$CF_2COF$ and the number of functional groups determined from the absorption peak at an absorption frequency of 1840 cm$^{-1}$ caused by -$CH_2COF$.

The number of functional groups may be a total number of -CF=CF$_2$, -CF$_2$H, -COF, -COOH, -COOCH$_3$, -CONH$_2$ and -CH$_2$OH, or may be a total number of -CF$_2$H, -COF, -COOH, -COOCH$_3$ and -CH$_2$OH.

The functional group is introduced into a fluororesin (copolymer), for example, from a chain transfer agent or a polymerization initiator used in production of the fluororesin. For example, in the case of using an alcohol as chain transfer agent, or using a peroxide having a -CH$_2$OH structure as polymerization initiator, -CH$_2$OH is introduced into an end of the main chain of the fluororesin. Also, in the case of polymerizing a monomer having a functional group, the functional group is introduced into an end of the side chain of the fluororesin. The fluororesin may contain a unit derived from a monomer having a functional group.

Examples of the monomer having a functional group include a cyclic hydrocarbon monomer having a dicarboxylic acid anhydride group (-CO-O-CO-) and having a polymerizable unsaturated group in a ring described in Japanese Patent Laid-Open No. 2006-152234, and a monomer having a functional group (f) described in International Publication No. WO 2017/122743. In particular, examples of the monomer having a functional group include a monomer having a carboxy group (maleic acid, itaconic acid, citraconic acid, undecylenic acid, etc.); a monomer having an acid anhydride group (itaconic acid anhydride, citraconic acid anhydride, 5-nobornene-2,3-dicarboxylic acid anhydride, maleic acid anhydride, etc.) and a monomer having a hydroxy group or an epoxy group (hydroxybutyl vinyl ether, glycidyl vinyl ether, etc.).

The fluororesin may be produced, for example, by a conventionally known method such as appropriately mixing a monomer as constituent unit and an additive such as polymerization initiator to perform emulsion polymerization or suspension polymerization.

The fluororesin layer may contain other components on an as needed basis. Examples of the other components include additives such as a cross-linking agent, an antistatic agent, a thermal stabilizer, a foaming agent, a foam nucleating agent, an antioxidant, a surfactant, a photopolymerization initiator, an anti-friction agent, a surface modifier and a pigment. The content of the other components in the fluororesin layer relative to the mass of the fluororesin in the fluororesin layer is preferably less than 1 mass%, more preferably 0.5 mass% or less, and still more preferably 0.1 mass% or less, and the lower limit may be 0 mass% or more, though not limited. In other words, the fluororesin layer may contain no other components.

From the viewpoint of insulation characteristics, the thickness of the fluororesin layer is preferably 10 to 295 $\mu$m, more preferably 20 $\mu$m or more, still more preferably 30 $\mu$m or more, more preferably 270 $\mu$m or less, and still more preferably 250 $\mu$m or less.

The relative dielectric constant of the fluororesin layer is preferably 2.5 or less, more preferably 2.4 or less, still more preferably 2.3 or less, further preferably 2.2 or less, particularly preferably 2.1 or less, and preferably 1.8 or more. The relative dielectric constant is a value obtained by measuring the changes in the resonant frequency and the electric field intensity at a temperature of 20 to 25°C using a network analyzer HP8510C (manufactured by Hewlett Packard Enterprise) and a cavity resonator.

(PAEK resin layer)

The PAEK resin layer is formed on a periphery of the fluororesin layer, and contains a polyaryl ether ketone (PAEK) resin. The PAEK resin layer may constitute the outermost layer of the insulated electric wire, and, if the PAEK resin layer constitutes the outermost layer, an insulated electric wire comprising a coating layer that is unlikely to be damaged when inserted into the slot of the core of a rotating electric machine or when bent in the edgewise direction, for example, and that does not repel a varnish used for fixing the coated electric wire to the core may be obtained.

The PAEK resin is not limited as long as it contains a repeating unit including an arylene group, an ether group [-O-] and a carbonyl group [-C(=O)-], and examples thereof include a resin containing a repeating unit represented by any of the following formulas (a1) to (a5):

[-Ar-O-Ar-C(=O)-]      (a1)

[-Ar-O-Ar-C(=O)-Ar-C(=O)-]      (a2)

[-Ar-O-Ar-O-Ar-C(=O)-]      (a3)

[-Ar-O-Ar-C(=O)-Ar-O-Ar-C(=O)-Ar-C(=O)-]      (a4)

[-Ar-O-Ar-O-Ar-C(=O)-Ar-C(=O)-]      (a5)

wherein Ar represents a divalent aromatic hydrocarbon cyclic group that may have a substituent.

Examples of the divalent aromatic hydrocarbon cyclic group represented by Ar include a phenylene group (such as o-, m- or p-phenylene group), an arylene group having 6 to 10 carbon atoms such as naphthylene group, a biarylene group (each arylene group has 6 to 10 carbon atoms) such as biphenylene group (such as 2,2'-biphenylene group, 3,3'-biphenylene group, and 4,4'-biphenylene group), and a terarylene group (each arylene group has 6 to 10 carbon atoms) such as o-, m- or p-terphenylene group. These aromatic hydrocarbon cyclic groups may have a substituent such as a halogen atom, an alkyl group (a linear or branched chain alkyl group having 1 to 4 carbon atoms such as methyl group), a haloalkyl group, a hydroxyl group, an alkoxyl group (a linear or branched chain alkoxyl group having 1 to 4 carbon atoms such as methoxy group), a mercapto group, an alkylthio group, a carboxyl group, a sulfo group, an amino group, an N-substituted amino group, and a cyano group. Incidentally, in the repeating units (a1) to (a5), the type of each Ar may be the same or different from each other. A preferred Ar is a phenylene group (e.g., p-phenylene group) or a biphenylene group (e.g., 4,4'-biphenylene group).

Examples of the resin having a repeating unit (a1) include polyether ketone (e.g., "PEEK-HT" manufactured by Victrex plc). Examples of the resin having a repeating unit (a2) include polyether ketone ketone (e.g., "PEKK" manufactured by Arkema + Oxford Performance Materials, Inc.). Examples of the resin having a repeating unit (a3) include polyether ether ketone (e.g., "VICTREX PEEK" manufactured by Victrex plc, "Vestakeep (registered trademark)" manufactured by Evonik Industries AG, "Vestakeep-J" manufactured by Daicel-Evonik Ltd., "KetaSpire (registered trademark)" manufactured by Solvay Specialty Polymers), and polyether-diphenyl-ether-phenyl-ketone-phenyl (e.g., "Kadel (registered trademark)" manufactured by Solvay Specialty Polymers). Examples of the resin having a repeating unit (a4) include polyether ketone ether ketone ketone (e.g., "VICTREX ST" manufactured by Victrex plc). Examples of the resin having a repeating unit (a5) include polyether ether ketone ketone.

In the repeating unit including an arylene group, an ether group and a carbonyl group, the ratio between an ether segment (E) and a ketone segment (K) is, for example, E/K=0.5 to 3, preferably about 1 to 2.5. The ether segment imparts flexibility to a molecular chain, and the ketone segment imparts rigidity to a molecular chain. Accordingly, with increase of the ether segment, the crystallization rate increases, and the finally achievable degree of crystallinity increases, while with increase of the ketone segment, the glass transition temperature and the melting point tend to rise. These PAEK resins may be used alone or in combination.

Among these PAEK resins, a resin having any of the repeating units (a1) to (a3) is preferred. For example, as the PAEK resin, at least one resin selected from the group consisting of polyether ketone, polyether ether ketone, polyether ketone ketone, and polyether ketone ether ketone ketone is preferred.

In particular, from the viewpoint of excellent balance between the level of the glass transition temperature and melting point and the crystallization rate, a PAEK resin having the repeating unit (a3) is more preferred, and polyether ether ketone is particularly preferred.

It is preferable that the PAEK resin have a melt viscosity of 0.01 to 4.0 kNsm$^{-2}$ at 60 sec$^{-1}$ and 390°C. The lower limit of the melt viscosity is preferably 0.05 kNsm$^{-2}$, more preferably 0.10 kNsm$^{-2}$, still more preferably 0.15 kNsm$^{-2}$. The upper limit of the melt viscosity is preferably 2.5 kNsm$^{-2}$, more preferably 1.5 kNsm$^{-2}$, still more preferably 1.0 kNsm$^{-2}$, particularly preferably 0.5 kNsm$^{-2}$, most preferably 0.4 kNsm$^{-2}$. The melt viscosity of the PAEK resin is measured according to ASTM D3835.

The glass transition temperature of the PAEK resin is preferably 130°C or more, more preferably 135°C or more, still more preferably 140°C or more. The glass transition temperature is measured by a differential scanning calorimetry (DSC) device.

The melting point of the PAEK resin is preferably 300°C or more, more preferably 320°C or more. The melting point is measured by a differential scanning calorimetry (DSC) device.

From the viewpoint of insulation characteristics, the thickness of the PAEK resin layer is preferably 5 to 100 $\mu$m, more preferably 10 $\mu$m or more, still more preferably 15 $\mu$m or more, more preferably 80 $\mu$m or less, and still more preferably 70 $\mu$m or less.

(Composite resin layer)

It is also preferable that the coating layer of the coated electric wire further comprises a composite resin layer formed between the fluororesin layer and the PAEK resin layer. If the coating layer further comprises the composite resin layer, the fluororesin layer may be in firm contact with the PAEK resin layer through the composite resin layer.

The composite resin layer contains a melt-fabricable fluororesin and a PAEK resin.

Examples of the fluororesin contained in the composite resin layer include the same fluororesin contained in the fluororesin layer, and it is preferable that the fluororesin contained in the composite resin layer is the same as the fluororesin contained in the fluororesin layer. Further, if the fluororesin same as the fluororesin contained in the fluororesin layer constitutes the composite resin layer, the adhesion between the fluororesin layer and the composite resin layer may be further enhanced. For example, the fluororesins contained in the fluororesin layer and the composite resin layer may be both a copolymer containing TFE unit and a FAVE unit.

Further, it is preferable that the fluororesin contained in the composite resin layer has a functional group, in the same manner as the fluororesin contained in the fluororesin layer. The suitable number of functional groups of the fluororesin contained in the fluororesin layer is the same as the number of functional groups of the fluororesin contained in the fluororesin layer.

Examples of the PAEK resin contained in the composite resin layer include the same PAEK resin contained in the PAEK resin layer, and it is preferable that the PAEK resin contained in the composite resin layer is the same as the PAEK resin contained in the PAEK resin layer. Further, if the PAEK resin same as the PAEK resin contained in the PAEK resin layer constitutes the composite resin layer, the adhesion between the composite resin layer and the PAEK resin layer may be further enhanced. For example, the PAEK resins contained in the composite resin layer and the PAEK resin layer may be both polyether ether ketone.

The adhesion between the fluororesin layer and the composite resin layer is preferably 0.1 N/mm or more, more preferably 0.2 N/mm or more, still more preferably 0.3 N/mm or more, and particularly preferably 0.4 N/mm or more.

The adhesion between the composite resin layer and the PAEK resin layer is preferably 0.1 N/mm or more, more preferably 0.2 N/mm or more, still more preferably 0.3 N/mm or more, and particularly preferably 0.4 N/mm or more.

From the viewpoints of insulation characteristics and adhesion, the thickness of the composite resin layer is preferably 5 to 50 μm, more preferably 10 μm or more, still more preferably 15 μm or more, more preferably 40 μm or less, and still more preferably 30 μm or less.

(Method for producing insulated electric wire)

The insulated electric wire of the present disclosure may be produced by, for example, a production method such as:

(1) a production method in which, using an extruder, a fluororesin is heated to be melted and the melted fluororesin is extruded onto a conductor to form a fluororesin layer, and then a melted PAEK resin is extruded onto the fluororesin layer to form a PAEK resin layer,

(2) a production method in which, using an extruder, a fluororesin is heated to be melted and the melted fluororesin is extruded onto a conductor to form a fluororesin layer, and at the same time, a melted PAEK resin is extruded onto the fluororesin layer to form a PAEK resin layer, and

(3) a production method in which, using an extruder, a fluororesin is heated to be melted and the melted fluororesin is extruded onto a conductor to form a fluororesin layer, and then the fluororesin layer is coated with a heat-shrinkable tube containing a PAEK resin, which is then shrunk to form a PAEK resin layer.

In the production methods (1) to (3), by extruding a melted fluororesin onto a conductor that has been heated to a temperature higher than the temperature of the melted fluororesin, a coated electric wire in which the conductor is in close contact with the fluororesin layer with sufficient strength may be obtained. In the insulated electric wire obtained by such production methods, the conductor is in close contact with the coating layer (fluororesin layer) with sufficient strength and, therefore, the coating layer is unlikely to float from the conductor and wrinkles are unlikely to be generated on the coating layer even when the insulated electric wire is bent.

The extrusion-forming machine may be an extrusion-forming machine comprising a cylinder, a die, and a nipple having a passing port for sending out the conductor, though not limited.

The temperature of the melted fluororesin is usually equal to or more than the melting point of the fluororesin, and is preferably a temperature more than the melting point of the fluororesin by 15°C or more, more preferably a temperature more than the melting point of the fluororesin by 20°C or more, and still more preferably a temperature more than the melting point of the fluororesin by 25°C or more. The upper limit of the temperature of the melted fluororesin is not limited, but is, for example, less than the thermal-decomposition temperature of the fluororesin. The temperature of the melted fluororesin may be adjusted by adjusting the temperature of the cylinder or the die of the extrusion-forming machine, or the like. The temperature of the melted fluororesin may be specified by, for example, measuring the temperature of the fluororesin discharged from the outlet of the die using a thermocouple.

The temperature of the heated conductor is higher than the temperature of the melted fluororesin, and is preferably a temperature more than the temperature of the melted fluororesin by 15°C or more, and more preferably a temperature more than the temperature of the melted resin by 20°C or more. The upper limit of the temperature of the heated conductor is not limited, but is, for example, 700°C or less. The temperature of the heated conductor may be specified by, for example, measuring the temperature of the conductor between the heating apparatus and the extrusion-forming machine using a contact thermometer or a non-contact thermometer.

The temperature of the heated conductor may be adjusted by heating the conductor before being sent out to the extrusion-forming machine with a heating apparatus. The size, the shape, the number of the apparatuses, and the number of the heating sources of the heating apparatus are not limited, as long as the heating apparatus is an apparatus that heats a predetermined range at once at a high temperature such as a halogen heater, a carbon heater, a tungsten heater, a hot air heating apparatus, an induction heating apparatus, a microwave heating apparatus, a superheated steam generator, and a burner. Further, different methods may be used in combination, and a plurality of the heat sources may be used. Heating with a halogen heater is preferred, since a wide range may be uniformly irradiated at once.

The condition of the heating is not limited as long as the condition is such that the temperature of the conductor, when the conductor is brought into contact with the resin, is more than the forming temperature (head temperature), and the distance between the forming machine and the heating apparatus may be short or long. Further, there may be different heating apparatuses, heating tubes, heat-retaining tubes, or heat-insulating materials around the traveling line after passing through the heating space, for the purpose of retaining the heat of the conductor.

The line speed during the extrusion forming may be 0.1 to 50 m/minute, and preferably 20 m/minute or less.

The insulated electric wire may be cooled after forming the fluororesin layer. The cooling method is not limited, and may be a method such as water-cooling and air-cooling. If the insulated electric wire is cooled by air-cooling, the wire may be cooled at a moderate speed, whereby the thickness of the coating layer tends to be uniform.

The insulated electric wire may be heat-treated after forming the coating layer. The insulated electric wire may be heat-treated before or after cooling the insulated electric wire. By heat-treating the insulated electric wire, the adhesion between the conductor and the fluororesin layer may be further enhanced.

The heat treatment may be performed by heating the insulated electric wire in batch processing or continuous processing using a circulating hot air oven or a highfrequency induction heating furnace. Alternatively, the heat treatment may be performed by a salt bath method. In the salt bath method, heating is performed by letting the conductor coated with the resin pass through a melted salt. Examples of the melted salt include a mixture of potassium nitrate and sodium nitrate.

The temperature for the heat-treatment is usually equal to or more than the glass transition temperature of the fluororesin, preferably a temperature more than the melting point by 15°C or more, and preferably a temperature equal to or less than the temperature more than the melting point of the fluororesin by 50°C.

From the viewpoints of further enhancing the adhesion between the conductor and the fluororesin layer and suppressing oxidation of the conductor, the time for heat treatment is preferably 0.1 to 15 minutes, more preferably 0.5 minutes or more, and more preferably 10 minutes or less. In the case of heating at high temperatures for a long time, a core wire made of copper may be oxidized and discolored in some cases.

The insulated electric wire of the present disclosure may be suitably used as an industrial motor wound wire or a flat magnet wire.

The insulated electric wire of the present disclosure may be wound around for use as a coil. The insulated electric wire and the coil of the present disclosure are suitably used for electrical devices and electronic devices such as a motor, a generator and an inductor. Further, the insulated electric wire and the coil of the present disclosure can be suitably used for in-vehicle electrical devices and in-vehicle electronic devices such as an in-vehicle motor, an in-vehicle generator and an in-vehicle inductor.

Having described an embodiment in the above, it is understood that various changes in the embodiment and details are possible without departing from the sprit and scope of the claims.

<1> According to a first aspect of the present disclosure, provided is:
an insulated electric wire, comprising:

    a conductor; and
    a coating layer formed on a periphery of the conductor,
    wherein the coating layer comprises:

        a fluororesin layer containing a melt-fabricable fluororesin; and
        a polyaryl ether ketone (PAEK) resin layer containing a PAEK resin that is formed on a periphery of the fluororesin layer, and
        wherein a thickness of the coating layer is 40 to 300 $\mu$m.

<2> According to a second aspect of the present disclosure, provided is:
the insulated electric wire according to the first aspect, wherein a proportion of a mass of the fluororesin layer is 50 mass% or more relative to a mass of the insulated electric wire.

<3> According to a third aspect of the present disclosure, provided is:
the insulated electric wire according to the first or second aspect, wherein a relative dielectric constant of the coating layer is 2.9 or less.

<4> According to a fourth aspect of the present disclosure, provided is:
the insulated electric wire according to any of the first to third aspects, wherein a partial discharge inception voltage measured at 25°C satisfies the following relational expression:

```
Partial discharge inception voltage (V) ≥ 2.2 × X + 810
```

wherein X is the proportion of the mass (mass%) of the fluororesin layer relative to the mass of the insulated electric wire.

<5> According to a fifth aspect of the present disclosure, provided is:
the insulated electric wire according to any of the first to fourth aspects, wherein a rate of change calculated by the following expression is less than 10%:

Rate of change (%) = [(Partial discharge inception voltage measured at 25°C) - (Partial discharge inception voltage measured at 200°C)]/(Partial discharge inception voltage measured at 25°C) × 100.

<6> According to a sixth aspect of the present disclosure, provided is:
the insulated electric wire according to any of the first to fifth aspects, wherein a rate of change calculated by the following expression is less than 10%:

Rate of change (%) = [(Partial discharge inception voltage measured at 25°C after heating insulated electric wire at 200°C for 1,000 hours) - (Partial discharge inception voltage measured at 25°C)]/(Partial discharge inception voltage measured at 25°C) × 100.

<7> According to a seventh aspect of the present disclosure, provided is:

the insulated electric wire according to any of the first to sixth aspects,
wherein a thickness of the PAEK resin layer is 15 $\mu$m or more, and
wherein a load that causes energization is 1,500 g or more.

<8> According to an eighth aspect of the present disclosure, provided is:
the insulated electric wire according to any of the first to seventh aspects, wherein a melt flow rate of the fluororesin contained in the fluororesin layer is 0.1 to 120 g/10 minutes.
<9> According to a ninth aspect of the present disclosure, provided is:
the insulated electric wire according to any of the first to eighth aspects, wherein a melting point of the fluororesin contained in the fluororesin layer is 240 to 320°C.
<10> According to a tenth aspect of the present disclosure, provided is:
the insulated electric wire according to any of the first to ninth aspects, wherein the fluororesin contained in the fluororesin layer contains tetrafluoroethylene unit and a fluoroalkyl vinyl ether unit.
<11> According to an eleventh aspect of the present disclosure, provided is:
the insulated electric wire according to the tenth aspect, wherein the fluororesin contained in the fluororesin layer has a fluoroalkyl vinyl ether unit content of 1.0 to 30.0 mol% relative to all monomer units.
<12> According to a twelfth aspect of the present disclosure, provided is:
the insulated electric wire according to any of the first to ninth aspects, wherein the fluororesin contained in the fluororesin layer contains tetrafluoroethylene unit and hexafluoropropylene unit.
<13> According to a thirteenth aspect of the present disclosure, provided is:
the insulated electric wire according to any of the first to twelfth aspects, wherein the fluororesin contained in the fluororesin layer has a functional group, and the number of functional groups of the fluororesin is 5 to 1,300 per $10^6$ carbon atoms.
<14> According to a fourteenth aspect of the present disclosure, provided is:
the insulated electric wire according to any of the first to thirteenth aspects, wherein the fluororesin has at least one functional group selected from the group consisting of a carbonyl group-containing group, an amino group, a hydroxy group, a difluoromethyl group, an olefinic group, an epoxy group and an isocyanate group.
<15> According to a fifteenth aspect of the present disclosure, provided is:
the insulated electric wire according to any of the first to fourteenth aspects, wherein the conductor is made of at least one selected from the group consisting of copper, copper alloy, aluminum and aluminum alloy.
<16> According to a sixteenth aspect of the present disclosure, provided is:
the insulated electric wire according to any of the first to fifteenth aspects, wherein the conductor has any of a round cross section, an oval cross section, a rectangular cross section, a square cross section, and a polygonal cross section.
<17> According to a seventeenth aspect of the present disclosure, provided is:

the insulated electric wire according to any of the first to sixteenth aspects,
wherein the coating layer further comprises a composite resin layer that is formed between the fluororesin layer and the PAEK resin layer and that contains the melt-fabricable fluororesin and the PAEK resin, and
wherein an adhesion between the fluororesin layer and the composite resin layer and an adhesion between the composite resin layer and the PAEK resin layer are both 0.1 N/mm or more.

<18> According to an eighteenth aspect of the present disclosure, provided is:
the insulated electric wire according to the seventeenth aspect, wherein the fluororesin contained in the composite resin layer contains tetrafluoroethylene unit and a fluoroalkyl vinyl ether unit.

<19> According to a nineteenth aspect of the present disclosure, provided is:

the insulated electric wire according to the seventeenth or eighteenth aspect, wherein the fluororesin contained in the composite resin layer has the functional group, and the number of functional groups of the fluororesin is 5 to 1,300 per $10^6$ carbon atoms.

<20> According to a twentieth aspect of the present disclosure, provided is:

the insulated electric wire according to any of the first to nineteenth aspects, wherein the insulated electric wire is an industrial motor wound wire or a flat magnet wire.

EXAMPLES

Next, an embodiment of the present disclosure is described with reference to Examples, though the present disclosure is not limited to the Examples only.

Each value in Examples was measured by the following method.

(Melt flow rate (MFR))

According to ASTM D1238, using a melt indexer (manufactured by Yasuda Seiki Seisakusho, Ltd.), a mass of the copolymer flowing out from a nozzle having an inner diameter of 2.1 mm and a length of 8 mm at 372°C under a load of 5 kg per 10 minutes (g/10 minutes) was determined.

(Melting point)

The melting point was determined as the temperature corresponding to the maximum value of the quantity of heat of fusion in the heat-of-fusion curve at a temperature raising rate of 10°C/minute using a differential scanning calorimeter [DSC].

(Composition of fluororesin)

The measurement was performed by $^{19}$F-NMR method.

(Coating thickness)

One end of the insulated wire having a length of 10 mm was cut to collect an electric wire sample, which was then consolidated with a curing agent and the cross section was polished.

The cross section of the sample was magnified 50 times by a video microscope (Keyence VHX-S660) to measure the thickness at three places each of top, bottom, left and right spots (12 spots in total). The average was calculated as the coating thickness.

(Relative dielectric constant)

A film was formed with a co-extruding machine so that the film had the electric wire-coating constitutions of each Example or Comparative Example. A strip-shaped film having a width of 2 mm and a length of 100 mm was cut out from the obtained film, and the relative dielectric constant at 1 MH at 20 to 25°C was measured by a cavity resonator perturbation method (a dielectric constant measuring apparatus manufactured by Kanto Electronics Application & Development Inc., a network analyzer manufactured by Agilent Technologies, Inc.).

(Partial discharge inception voltage (PDIV) (25°C, 200°C))

Two insulated electric wires each having a length of 90 cm were cut out, and the wires were stranded together applying a tension of 13.5 N to form a coil in which the wires were stranded 8 times in the range of 125 mm in the center part. Thereafter, 10 mm of the insulating coating film from the end of the sample was removed, and, by using a partial discharge voltage measuring device (DAC-PD-7 manufactured by Soken Electric Co., Ltd.), a 50-Hz sine wave alternating voltage was applied between the conductors of the two insulated electric wires at an ambient temperature of 25°C (relative humidity: 50%) or at an ambient temperature of 200°C (relative humidity: 50%) for measurement. With a voltage raising rate set to 50 V/sec, a voltage lowering rate set to 50 V/sec, and a voltage retention time set to 0 sec, the voltage at an occurrence time of discharge of 10 pC or more was defined as partial discharge inception voltage.

Further, the rate of change (%) was determined in accordance with the following expression:

Rate of change (%) = [(PDIV measured at 25°C) - (PDIV measured at 200°C)]/(PDIV measured at 25°C) × 100.

(Long-term durability test (PDIV at 200°C × 1,000H))

Two insulated electric wires each having a length of 90 cm were cut out, and the wires were stranded together applying a tension of 13.5 N to form a coil in which the wires were stranded 8 times in the range of 125 mm in the center part. Thereafter, 10 mm of the insulating coating film from the end of the sample was removed, and the sample was exposed in an electric furnace at 200°C for 1,000 H (1,000 hours). The exposed sample was cooled at room temperature for 24 hours, and, by using a partial discharge voltage measuring device (DAC-PD-7 manufactured by Soken Electric Co., Ltd.), a 50-Hz sine wave alternating voltage was applied between the conductors of the two insulated electric wires for measurement. With a voltage raising rate set to 50 V/sec, a voltage lowering rate set to 50 V/sec, and a voltage retention time set to 0 sec, the voltage at an occurrence time of discharge of 10 pC or more was defined as partial discharge inception voltage.
Further, the rate of change (%) was determined in accordance with the following expression:

Rate of change (%) = [(PDIV measured after long-term durability test) - (PDIV measured at 25°C)]/(PDIV measured at 25°C) × 100.

(Abrasion resistance test)

A unidirectional abrasion test was performed by using an abrasion resistance tester (No. 215 scrape tester, manufactured by Yasuda Seiki Seisakusho, Ltd.). A continuously increasing force was applied to a needle, and the surface of the coating layer of the insulated electric wire was scratched with the needle. The force at an occurrence time of electrical connection between the needle and the conductor was defined as destructive force (g).
Test method: JIS C3216-3.

(Varnish impregnation)

YE-7309 manufactured by RYODEN KASEI CO.,LTD. (an ATF-resistant varnish/two-liquid type), which was a varnish, was applied on the surface layer of the insulated electric wire.

Good: Varnish was not repelled.
Poor: Varnish was repelled.

(Adhesion between layers) (Peel strength)

The adhesion was measured using AUTOGRAPH AGS-J (50 N) (manufactured by SHIMADZU CORPORATION). Two 50-mm approximately parallel cuts along the long-axis direction were made, and cuts connecting the ends of the 50-mm approximately parallel cuts were made along the short-axis direction so that the cuts were each perpendicular to the 50-mm approximately parallel cuts in the coating film. The end was peeled off by 10 mm and held by the upper chuck. The conductor was fixed at the bottom so that the long-surface direction was horizontal. A jig that moved in the lateral direction in accordance with the moving distance in the vertical direction when the apparatus was moved in the tensile direction was used, and the angle was adjusted so that the peeled coating film was always perpendicular to the conductor in the long-surface direction. The tensile stress when the coating film was pulled at 100 mm/min until the coating film was peeled off by 30 mm was measured, and the maximum point stress thereof was defined as peel strength.
In other words, using AUTOGRAPH AGS-J (50 N) (manufactured by SHIMADZU CORPORATION), the peel strength of the coating film (coating layer) on the main surface of the flat conductor of the insulated electric wire was measured. Here, of the two pairs of opposing surfaces of the flat conductor, the surface having a larger dimension in the width direction of the conductor (the surface having the long side perpendicular to the longitudinal direction of the conductor) is defined as main surface, and the surface orthogonal to the main surface (the surface having the short side perpendicular to the longitudinal direction) is defined as side surface. The dimension in the width direction of the conductor of the main surface is larger than the dimension in the width direction of the conductor of the side surface. Two approximately parallel cuts were made in the coating film on one main surface along the longitudinal direction of the insulated electric wire, and two cuts orthogonal to the longitudinal direction were made at an interval of 50 mm in the longitudinal direction. The end of the cut coating film was peeled off from the conductor to provide a 10-mm gripping margin. The insulated electric wire was fixed to a jig so that the other main surface faced downward, and the gripping margin was held by the upper chuck and the peeled coating film was folded back at 90 degrees. A jig that moved so that the angle between the insulated electric wire fixed to the jig and the coating film was maintained at 90 degrees was used. The film was peeled off by 30 mm at a tensile speed of 100 mm/min to measure the tensile stress, and the maximum point stress thereof was defined as peel strength.

(Damage of coating)

The electric wire was inserted into a dummy stator, and the state of the coating was checked.

Good: No damage was found on the coating.
Poor: A damage was found on the coating.

Examples 1 to 4

A copolymer (PFA) of tetrafluoroethylene and perfluoro (propyl vinyl ether) having a MFR of 14 g/10 min and a melting point of 306°C, and polyether ketone (PEEK) (KT-880P manufactured by SOLVAY) having a MFR of 36 g/10 min and a melting point of 343°C were used for the resin for forming the insulating coating film. With regard to the constitutions of the electric wire, the PFA and the PEEK were used for the inner insulating layer and the outer insulating layer, respectively, and AC1.0 was used for the conductor. The thicknesses of coating of all layers were unified to 100 $\mu$m, and each thickness of coating was adjusted so that the weight ratio of the PFA was 50 to 90 Wt%.
Further, a co-extruding machine of $\varphi$ 30 was used as an electric wire-forming machine. The die temperature at the end was set to 390°C, and the wire was drawn at a speed of 30 m/min.

Example 5

Polyether ketone ether ketone ketone (PEKK) (KEPSTAN7002 manufactured by ARKEMA) having a MFR of 35 g/10 min and a melting point of 331°C was used for the outer layer of the resin for forming the insulating coating film of Example 5, and the thicknesses of coating of all layers were set to 100 $\mu$m, and each thickness of coating was adjusted so that the weight ratio of the PFA was 80 Wt%. Except for this, an insulated electric wire was formed under the same condition as in Examples 1 to 4.

Examples 6 to 7

A copolymer (PFA) of tetrafluoroethylene and perfluoro (propyl vinyl ether) having a MFR of 68 g/10 min and a melting point of 301°C, a copolymer (PFA) of tetrafluoroethylene and perfluoro (propyl vinyl ether) having a MFR of 28 g/10 min and a melting point of 303°C, and polyether ketone (PEEK) (KT-880P manufactured by SOLVAY) having a MFR of 36 g/10 min and a melting point of 343°C were used for the resin for forming the insulating coating film of Examples 6 to 7. The thicknesses of coating of all layers were unified to 100 $\mu$m, and each thickness of coating was adjusted so that the weight ratio of the PFA was 80 Wt%. Except for this, an insulated electric wire was formed under the same condition as in Examples 1 to 4.

Examples 8 to 9

The thicknesses of coating of all layers of the insulated electric wires of Examples 8 to 9 were set to 200 $\mu$m and 300 $\mu$m, and each thickness of coating was adjusted so that the weight ratio of the PFA was 80 Wt%. Except for this, an insulated electric wire was formed under the same condition as in Examples 1 to 4.

Comparative Examples 1 to 3

A copolymer (PFA) of tetrafluoroethylene and perfluoro (propyl vinyl ether) having a MFR of 14 g/10 min and a melting point of 306°C, polyether ketone (PEEK) (KT-880P manufactured by SOLVAY) having a MFR of 36 g/10 min and a melting point of 343°C, and polyether ketone ether ketone ketone (PEKK) (KEPSTAN7002 manufactured by ARKEMA) having a MFR of 35 g/10 min and a melting point of 331°C were used for the resin for forming the insulating coating film of Comparative Examples 1 to 3 to form a single-layered coated electric wire. The thickness of coating was set to 100 $\mu$m, and a short-axis extruder of $\varphi$ 30 was used as an electric wire-forming machine. The die temperature at the end was set to 390°C and the wire was drawn at a speed of 30 m/min.
It was confirmed that the rates of change in the PDIV under an atmosphere of 200°C and the rates of change in the PDIV in the long-term durability test (200°C $\times$ 1,000 H) for Examples 1 to 5 were lower than those for Comparative Examples 2 to 3 by approximately one third.
It was confirmed that the abrasion resistance was enhanced by three times the abrasion resistance for Comparative Example 1 (PFA single-layered electric wire) by coating the outer layer with the PAEK resin. Further, it was confirmed that the varnish was not repelled when the varnish impregnation was performed.

Example 13

A copolymer (PFA) of tetrafluoroethylene and perfluoro (propyl vinyl ether) having a MFR of 14 g/10 min and a melting point of 306°C, and polyether ketone (PEEK) (KT-880P manufactured by SOLVAY) having a MFR of 36 g/10 min and a melting point of 343°C were used for the resin for forming the insulating coating film. With regard to the constitutions of the electric wire, the PFA and the PEEK were used for the inner insulating layer and the outer insulating layer, respectively, and a flat conductor having a vertical length of 2.0 mm and a lateral length of 3.4 mm was used for the conductor. The thicknesses of coating of all layers were set to 100 μm, and each thickness of coating was adjusted so that the weight ratio of the PFA was 80 Wt%.
Further, a co-extruding machine of φ 30 was used as an electric wire-forming machine. The die temperature at the end was set to 390°C, and the wire was drawn at a speed of 5 m/min.

Example 14

An insulated electric wire was formed under the same condition as in Example 13 except that polyether ketone ether ketone ketone (PEKK) (KEPSTAN7002 manufactured by ARKEMA) having a MFR of 35 g/10 min and a melting point of 331°C was used for the outer layer.

Comparative Example 4

A copolymer (PFA) of tetrafluoroethylene and perfluoro (propyl vinyl ether) having a MFR of 14 g/10 min and a melting point of 306°C was used for the resin for forming the insulating coating film, and a flat conductor having a vertical length of 2.0 mm and a lateral length of 3.4 mm was used for the conductor to form a single-layered coated electric wire. The thickness of coating was set to 100 μm, and a short-axis extruder of φ 30 was used as an electric wire-forming machine. The die temperature at the end was set to 390°C and the wire was drawn at a speed of 5 m/min.

Examples 15 and 16

An insulated electric wire was formed under the same condition as in Examples 13 and 14 except that adhesive layer was formed between the inner layer and the outer layer using a mixture containing a copolymer (PFA) of tetrafluoroethylene and perfluoro (propyl vinyl ether) having a MFR of 14 g/10 min and a melting point of 306°C, and polyether ketone (PEEK) (KT-880P manufactured by SOLVAY) having a MFR of 36 g/10 min and a melting point of 343°C.
It was confirmed that the coated electric wires of Examples 13 to 16 had no damage of coating when inserted into the dummy stator. Further, it was also confirmed that each coating layer had a sufficient adhesion strength.
The results of the above are shown in Tables 2 and 3.

[Table 2]

Table 2

| | | | Example 1 | Example 2 | Example 3 | Example 4 | Example 5 | Example 6 | Example 7 | Example 8 | Example 9 | Comparative Example 1 | Comparative Example 2 | Comparative Example 3 |
|---|---|---|---|---|---|---|---|---|---|---|---|---|---|---|
| Inner layer | Resin | | PFA | PFA | PFA | PFA | PFA | PFA | PFA | PFA | PFA | PFA | — | — |
| | MFR (g/10 minutes) | | 14 | 14 | 14 | 14 | 14 | 68 | 28 | 14 | 14 | 14 | — | — |
| | Melting point (°C) | | 306 | 306 | 306 | 306 | 306 | 301 | 303 | 306 | 306 | 306 | — | — |
| | Composition of copolymer [mol%] | TFE | 98.2 | 98.2 | 98.2 | 98.2 | 98.2 | 97.4 | 97.6 | 98.2 | 98.2 | 98.2 | — | — |
| | | PPVE | 1.8 | 1.8 | 1.8 | 1.8 | 1.8 | 2.6 | 2.4 | 1.8 | 1.8 | 1.8 | — | — |
| Outer layer | Resin | | PEEK | PEEK | PEEK | PEEK | PEKK | PEEK | PEEK | PEEK | PEEK | — | PEEK | PEKK |
| Adhesive layer | Resin | | — | — | — | — | — | — | — | — | — | — | — | — |
| Weight ratio of PFA (Wt%) | | | 50 | 60 | 80 | 90 | 80 | 80 | 80 | 80 | 80 | — | — | — |
| Thickness of coating (μm) | Inner layer (μm) | | 40 | 50 | 71 | 85 | 69 | 71 | 71 | 156 | 238 | — | — | — |
| | Outer layer (μm) | | 60 | 50 | 29 | 15 | 31 | 29 | 29 | 44 | 62 | — | — | — |
| | Adhesive layer (μm) | | — | — | — | — | — | — | — | — | — | — | — | — |
| | Total thickness (μm) | | 100 | 100 | 100 | 100 | 100 | 100 | 100 | 200 | 300 | 100 | 100 | 100 |
| Conductor | Type | | round | round | round | round | round | round | round | round | round | round | round | round |
| | Outer diameter (mm) | | 1.0 | 1.0 | 1.0 | 1.0 | 1.0 | 1.0 | 1.0 | 1.0 | 1.0 | 1.0 | 1.0 | 1.0 |
| Dielectric constant | Actual measurement | | 2.8 | — | 2.4 | 2.3 | 2.3 | 2.4 | 2.4 | 2.4 | 2.4 | 2.1 | 3.2 | 2.6 |
| PDIV (V) | Actual measurement | | 1164 | — | 1237 | 1277 | 1280 | 1225 | 1243 | 1724 | 2079 | 1355 | 1086 | 1223 |
| PDIV (V) at 200°C | Actual measurement | | 1107 | — | 1202 | 1256 | 1235 | — | — | — | — | 1338 | 956 | 1065 |
| | Rate of change (%) | | 5 | — | 3 | 2 | 4 | — | — | — | — | 1 | 12 | 13 |
| Long-term durability test PDIV at 200°C x 1000H | Actual measurement | | 1255 | — | 1302 | — | 1215 | — | — | — | — | 1325 | 924 | 1003 |
| | Rate of change (%) | | 8 | — | 5 | — | 5 | — | — | — | — | 2 | 15 | 18 |
| Abrasion resistance test | Actual measurement (g) | | — | 2500 | 1600 | — | 1700 | 1350 | 1400 | — | — | 450 | 3000 or more | 3000 or more |
| Varnish impregnation | Result | | — | Good | Good | — | Good | — | — | — | — | Poor | Good | Good |

[Table 3]

Table 3

| | | | Example 13 | Example 14 | Example 15 | Example 16 | Comparative Example 4 |
|---|---|---|---|---|---|---|---|
| Inner layer | Resin | | PFA | PFA | PFA | PFA | PFA |
| | MFR (g/10 minutes) | | 14 | 14 | 14 | 14 | 14 |
| | Melting point (°C) | | 306 | 306 | 306 | 306 | 306 |
| | Composition of copolymer [mol%] | TFE | 98.2 | 98.2 | 98.2 | 98.2 | 98.2 |
| | | PPVE | 1.8 | 1.8 | 1.8 | 1.8 | 1.8 |
| Outer layer | Resin | | PEEK | PEKK | PEEK | PEKK | – |
| Adhesive layer | Resin | | – | – | PFA/PEEK Alloy | PFA/PEEK Alloy | – |
| Weight ratio of PFA (Wt%) | | | 80 | 80 | 80 | 80 | – |
| Thickness of coating (μm) | Inner layer (μm) | | 71 | 69 | 61 | 59 | – |
| | Outer layer (μm) | | 29 | 31 | 19 | 21 | – |
| | Adhesive layer (μm) | | – | – | 20 | 20 | – |
| | Total thickness (μm) | | 100 | 100 | 100 | 100 | 100 |
| Conductor | Type | | Flat | Flat | Flat | Flat | Flat |
| | Outer diameter (mm) Vertical length × lateral length | | 2.0×3.4 | 2.0×3.4 | 2.0×3.4 | 2.0×3.4 | 2.0×3.4 |
| Adhesion between layers | Actual measurement (N/mm) | | 0.5 | 0.4 | 2.0 | 1.8 | – |
| Damage of coating | Determination | | Good | Good | Good | Good | Poor |

## Claims

1. An insulated electric wire, comprising:

    a conductor; and
    a coating layer formed on a periphery of the conductor,
    wherein the coating layer comprises:

a fluororesin layer containing a melt-fabricable fluororesin; and

a polyaryl ether ketone (PAEK) resin layer containing a PAEK resin that is formed on a periphery of the fluororesin layer, and

wherein a thickness of the coating layer is 40 to 300 μm.

2. The insulated electric wire according to claim 1, wherein a proportion of a mass of the fluororesin layer is 50 mass% or more relative to a mass of the insulated electric wire.

3. The insulated electric wire according to claim 1 or 2, wherein a relative dielectric constant of the coating layer is 2.9 or less.

4. The insulated electric wire according to any of claims 1 to 3, wherein a partial discharge inception voltage measured at 25°C satisfies the following relational expression:

$$\text{Partial discharge inception voltage (V)} \geq 2.2 \times X + 810$$

wherein X is the proportion of the mass (mass%) of the fluororesin layer relative to the mass of the insulated electric wire.

5. The insulated electric wire according to any of claims 1 to 4, wherein a rate of change calculated by the following expression is less than 10%:

Rate of change (%) = [(Partial discharge inception voltage measured at 25°C) - (Partial discharge inception voltage measured at 200°C)]/(Partial discharge inception voltage measured at 25°C) × 100.

6. The insulated electric wire according to any of claims 1 to 5, wherein a rate of change calculated by the following expression is less than 10%:

Rate of change (%) = [(Partial discharge inception voltage measured at 25°C after heating insulated electric wire at 200°C for 1,000 hours) - (Partial discharge inception voltage measured at 25°C)]/(Partial discharge inception voltage measured at 25°C) × 100.

7. The insulated electric wire according to any of claims 1 to 6,

wherein a thickness of the PAEK resin layer is 15 μm or more, and
wherein a load that causes energization is 1,500 g or more.

8. The insulated electric wire according to any of claims 1 to 7, wherein a melt flow rate of the fluororesin contained in the fluororesin layer is 0.1 to 120 g/10 minutes.

9. The insulated electric wire according to any of claims 1 to 8, wherein a melting point of the fluororesin contained in the fluororesin layer is 240 to 320°C.

10. The insulated electric wire according to any of claims 1 to 9, wherein the fluororesin contained in the fluororesin layer contains tetrafluoroethylene unit and a fluoroalkyl vinyl ether unit.

11. The insulated electric wire according to claim 10, wherein the fluororesin contained in the fluororesin layer has a fluoroalkyl vinyl ether unit content of 1.0 to 30.0 mol% relative to all monomer units.

12. The insulated electric wire according to any of claims 1 to 9, wherein the fluororesin contained in the fluororesin layer contains tetrafluoroethylene unit and hexafluoropropylene unit.

13. The insulated electric wire according to any of claims 1 to 12, wherein the fluororesin contained in the fluororesin layer has a functional group, and the number of functional groups of the fluororesin is 5 to 1,300 per $10^6$ carbon atoms.

14. The insulated electric wire according to any of claims 1 to 13, wherein the fluororesin has at least one functional group selected from the group consisting of a carbonyl group-containing group, an amino group, a hydroxy group, a difluoromethyl group, an olefinic group, an epoxy group and an isocyanate group.

15. The insulated electric wire according to any of claims 1 to 14, wherein the conductor is made of at least one selected from the group consisting of copper, copper alloy, aluminum and aluminum alloy.

16. The insulated electric wire according to any of claims 1 to 15, wherein the conductor has any of a round cross section, an oval cross section, a rectangular cross section, a square cross section, and a polygonal cross section.

17. The insulated electric wire according to any of claims 1 to 16,

   wherein the coating layer further comprises a composite resin layer that is formed between the fluororesin layer and the PAEK resin layer and that contains the melt-fabricable fluororesin and the PAEK resin, and
   wherein an adhesion between the fluororesin layer and the composite resin layer and an adhesion between the composite resin layer and the PAEK resin layer are both 0.1 N/mm or more.

18. The insulated electric wire according to claim 17, wherein the fluororesin contained in the composite resin layer contains tetrafluoroethylene unit and a fluoroalkyl vinyl ether unit.

19. The insulated electric wire according to claim 17 or 18, wherein the fluororesin contained in the composite resin layer has the functional group, and the number of functional groups of the fluororesin is 5 to 1,300 per $10^6$ carbon atoms.

20. The insulated electric wire according to any of claims 1 to 19, wherein the insulated electric wire is an industrial motor wound wire or a flat magnet wire.

## EP 4 583 126 A1

# INTERNATIONAL SEARCH REPORT

| | International application No. |
|---|---|
| | **PCT/JP2023/030975** |

| A. | CLASSIFICATION OF SUBJECT MATTER |
|---|---|

*H01B 7/02*(2006.01)i; *H01B 3/24*(2006.01)i; *H01B 3/30*(2006.01)i
FI: H01B7/02 A; H01B7/02 C; H01B3/24 A; H01B3/30 Z

According to International Patent Classification (IPC) or to both national classification and IPC

| B. | FIELDS SEARCHED |
|---|---|

Minimum documentation searched (classification system followed by classification symbols)

H01B7/02; H01B3/24; H01B3/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2019-519062 A (GEBAUER & GRILLER METALLWERK GMBH) 04 July 2019 (2019-07-04) paragraphs [0040], [0042]-[0051], fig. 1-3 | 1-7, 9, 15-16, 20 |
| A | | 8, 10-14, 17-19 |
| X | JP 2015-95363 A (ASAHI GLASS CO., LTD.) 18 May 2015 (2015-05-18) paragraphs [0017]-[0104], fig. 1-4 | 1-16, 20 |
| A | | 17-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 October 2023** | **07 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/030975**

| Patent document cited in search report | | | Publication date (day/month/year) | Patent family member(s) | Publication date (day/month/year) |
|---|---|---|---|---|---|
| JP | 2019-519062 | A | 04 July 2019 | US 2019/0131037 A1 paragraphs [0075], [0082]-[0095], fig. 1-3 | |
| JP | 2015-95363 | A | 18 May 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017175516 A
- JP 2021002458 A
- JP 2006152234 A
- WO 2017122743 A